Europäisches Patentamt

European Patent Office

Office européen des brevets

(19)

(11) Publication number : **0 598 591 A2**

## (12) EUROPEAN PATENT APPLICATION

(21) Application number : **93309134.0**

(22) Date of filing : **16.11.93**

(51) Int. Cl.⁵ : **B32B 27/12**

(30) Priority : **17.11.92 JP 329910/92**
**21.12.92 JP 355390/92**

(43) Date of publication of application :
**25.05.94 Bulletin 94/21**

(84) Designated Contracting States :
**DE FR GB**

(71) Applicant : **Tonen Corporation**
**1-1,Hitotsubashi, 1-Chome**
**Chiyoda-Ku**
**Tokyo (JP)**

(72) Inventor : **Saito, Makoto, c/o Tonen**
**Corporation**
**3-1 Nishi-tsurugaoka 1-chome,**
**Oi-machi**
**Iruma-gun, Saitama-ken (JP)**
Inventor : **Takezawa, Makoto, c/o Tonen**
**Corporation**
**3-1 Nishi-tsurugaoka 1-chome,**
**Oi-machi**
**Iruma-gun, Saitama-ken (JP)**
Inventor : **Inoue, Hiroshi, c/o Tonen**
**Corporation**
**3-1 Nishi-tsurugaoka 1-chome,**
**Oi-machi**
**Iruma-gun, Saitama-ken (JP)**

(74) Representative : **Harvey, David Gareth et al**
**Graham Watt & Co.**
**Riverhead**
**Sevenoaks Kent TN13 2BN (GB)**

(54) **Fibre-reinforced sheet for reinforcement.**

(57)    The reinforcing fiber sheet comprises a support (2) and a reinforcing fiber layer (4) formed by arranging reinforcing fibers in one direction and bonded via an adhesive layer (3) to the support (2), which is a mesh member with an inter-tow interval of 1 to 50 mm.
     Another reinforcing fiber sheet comprises a support (2), a reinforcing fiber layer (4) formed by arranging reinforcing fibers in one direction and bonded via an adhesive layer (3) to the support (2), and a viscous resin layer (5) formed by uniformly coating a liquid resin on the reinforcing fiber layer (4) in a range of 0.1 to 25% by weight with respect to the reinforcing fibers.

# FIG. 1

EP 0 598 591 A2

This invention relates to reinforcing fiber sheets, which are used for reinforcing bridges, elevated roads and other building structures with fiber-reinforced plastics and permit reinforcement with satisfactory processibility at the sites of reinforcement as well as providing for improvement of the reinforcement strength. The reinforcing fiber sheet according to the invention can not only be used for building structure reinforcement work but can also be used satisfactorily for hand lay-up production from fiber-reinforced plastics of boats, for instance.

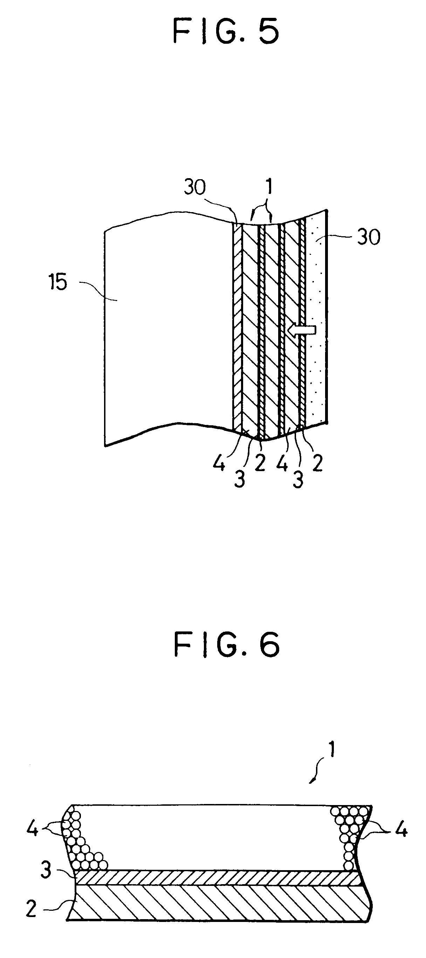

Recently, it has been in practice to reinforce the legs of bridges and elevated roads with fiber-reinforced plastics. The applicant has proposed reinforcing fiber sheets for building structure reinforcement, which permit reinforcement with satisfactory processibility at the sites of reinforcement and also permit improvement of the reinforcement strength, as disclosed in Japanese Patent Laid-Open No. H3-222734 and Japanese Patent Laid-Open No. H3-224901. Fig. 6 herewith shows such a reinforcing fiber sheet.

The illustrated reinforcing fiber sheet 1 comprises a support 2 with an adhesive layer 3 provided thereon and a reinforcing fiber layer 4, which is secured to the support 2 via the adhesive layer 3 and is formed by arranging reinforcing fibers in one direction. When using the reinforcing fiber sheet 1 for the reinforcement of a bridge or an elevated road, the reinforcing fiber layer 4 is impregnated with a matrix resin to be cured at the site of the reinforcement.

The reinforcing fiber layer 4 of the reinforcing fiber sheet 1 is impregnated with the matrix resin before the sheet 1 is applied to a reinforcement portion. Alternatively, the matrix resin is coated on the reinforcement portion, and then the sheet 1 is urged against the coating, thereby effecting the impregnation of the reinforcement fibers with the matrix resin. To improve the impregnation of the reinforcing fibers with the matrix resin, the support 2 of the reinforcing fiber sheet 1 is produced from a glass fiber cloth sheet or the like, and after application of the reinforcing fiber sheet 1 to the reinforcement portion the matrix resin is coated from the side of the support 2, thereby effecting the impregnation of the reinforcing fibers with the matrix resin.

However, as the result of research and experiments conducted by the inventors, it has been found that even by producing the support 2 from a glass fiber cloth sheet or the like it is very difficult or very inferior in operation control if it is intended to impregnate the reinforcing fiber layer with the matrix resin efficiently and uniformly from the side of the support 2. Also, it has been found that it is unsatisfactory to use as the support 2 a scrim cloth, a glass paper, a non-woven glass cloth, or non-woven cloths of various polymers such as polyamide and PPS (polyphenylene sulfide).

The inventors have found that by using as the support 2 a mesh member with an inter-tow interval of 1 to 50 mm it is possible to hold the reinforcing fibers suitably and obtain excellent handling, excellent impregnation with the matrix resin from the side of the support 2 and satisfactory operation control of the reinforcement at the site thereof. This invention has been accomplished on the basis of such novel findings by the inventors.

Moreover the above-mentioned reinforcing fiber sheet 1 as shown in Fig. 6 has the following problems.

The reinforcing fiber layer 4 on the support 2, is formed by stacking a large number of sub-layers of carbon fiber bundles obtained by converging a plurality of fiber filaments with a sizing agent. With this reinforcing fiber layer 4, only carbon fibers in the innermost sub-layer are lightly bonded via the adhesive layer 3 to the support 2. Therefore, it is liable that an outer portion of the reinforcing fiber layer 4 becomes nappy or fluffy when handling the reinforcing fiber sheet 1 in manufacturing or stocking or when impregnating the reinforcing fiber layer 4 with the matrix resin at the site of reinforcement or applying the reinforcing fiber sheet 1 to a portion for reinforcement. To prevent the reinforcing fiber layer from getting nappy or fluffy, the reinforcing fiber sheet 1 has to be handled with considerable care, thus posing problems in view of the operation efficiency.

One might think of using carbon fiber bundles more highly converged to prevent the nappiness or fluffiness. Doing so, however, deteriorates the impregnation of the reinforcing fiber layer 4 with the matrix resin, thus posing other problems.

The inventors have found that it is possible to prevent the nappiness or fluffiness by forming a uniform liquid resin coating as a viscous resin layer on the reinforcing fiberlayer 4 in a predetermined weight ratio to the reinforcing fibers used and also that this permits improvement of the impregnation of the reinforcing fiber layer 4 with the matrix resin even in case where fiber bundles of increased converging strength are used as reinforcing fibers.

An object of the invention, accordingly, is to provide a reinforcing fiber sheet, which, when used for reinforcing a building structure such as a bridge or an elevated road with fiber-reinforced plastics, provides for excellent impregnation with a matrix resin, permits reinforcement with satisfactory operation control at the site of reinforcement and permits improvement of the reinforcement strength.

Another object of the invention is to provide a reinforcing fiber sheet, which is suited for hand lay-up e.g. for producing small boats with fiber-reinforced plastics.

A further object of the invention is to provide a reinforcing fiber sheet, which can prevent nappiness or fluffiness during its handling, permits readier handling and permits excellent impregnation of the reinforcing fibers with a matrix resin when reinforcing a building structure, such as a bridge or an elevated road, with fiber-reinforced plastics or for hand lay-up production of small boats or the like of reinforcing fiber plastics.

In brief, according to one aspect of the invention, there is provided a reinforcing fiber sheet, which comprises at least a support, and a reinforcing fiber layer formed by arranging reinforcing fibers in one direction on the support and bonded via an adhesive layer to said support, the support being a mesh member with an inter-tow interval of 1 to 50 mm. The fibers used for the tows of the mesh member are such inorganic fibers as carbon fibers or glass fibers, such metal fibers as stainless steel fibers, such organic fibers as polyester fibers, aramid fibers, nylon fibers, polyethylene fibers or acrylic fibers, or such natural fibers as cotton fibers or silk fibers. Each tow can have a Tex (TEXTURE) of 1 to 100 g/km. The mesh member may be formed by braiding or knitting the tows, or is formed by joining intersections of the tows with an adhesive without braiding or knitting.

According to another aspect of the invention, there is provided a reinforcing fiber sheet comprising a support, a reinforcing fiber layer formed by arranging reinforcing fibers in one direction, said reinforcing fiber layer being bonded via an adhesive layer to said support, and a viscous resin layer formed by uniformly coating a liquid resin on said reinforcing fiber layer in a range of 0.1 to 25 % by weight with respect to said reinforcing fibers.

The viscous resin layer may be formed by uniformly spray coating a liquid resin in a range of 0.1 to 25 % by weight, preferably 1 to 10 % by weight, with respect to the reinforcing fibers constituting the reinforcing fiber layer. The resin can have a viscosity of 100 to 100,000 mPa.s, preferably 500 to 10,000 mPa.s at 20°C. For example, the liquid resin is epoxy resin without containing any curing agent, unsaturated polyester resin, vinyl ester resin, vinyl acetate resin, phenolresin, polyvinyl alcohol resin, or starch.

Although the support may be suitably releasable and non-permeable to resin in order that it can be separated conveniently from the reinforcing fiber sheet after the application of the reinforcing fiber sheet on the surface of the portion for reinforcement, the above mentioned mesh member may be suitably used as the support.

In the invention the reinforcing fibers may be one or more than two kinds of the fibers selected from pitch type carbon fibers, boron fibers, PAN type carbon fibers, aramid fibers, glass fibers, steel fibers, polyester fibers and polyethylene fibers. These various kinds of fibers may be used independently or as hybrid fibers obtained by combining two or more different kinds of fibers.

The invention will now be described by way of example only with reference to the accompanying drawings, in which:

Fig. 1 is a sectional view showing an embodiment of the reinforcing fiber sheet according to the invention;

Figs. 2(A) and 2(B) are views for explaining examples of the method of manufacturing the reinforcing fiber sheet shown in Fig. 1;

Figs. 3(A) and (B) are front views showing examples of a support used for the reinforcing fiber sheet according to the invention;

Fig. 4 is a view for explaining a method of manufacturing the reinforcing fiber sheet embodying the invention;

Fig. 5 is a sectional view showing one form of reinforcement with the reinforcing fiber sheet according to the invention; and

Fig. 6 is a sectional view showing a prior art reinforcing fiber sheet.

Fig. 7 is a sectional view showing a further embodiment of the reinforcing fiber sheet according to the invention; and

Fig. 8 is a sectional view showing a still further embodiment of the reinforcing fiber sheet according to the invention.

Now, the present reinforcing fiber sheet will be described in more detail with reference to the drawings.

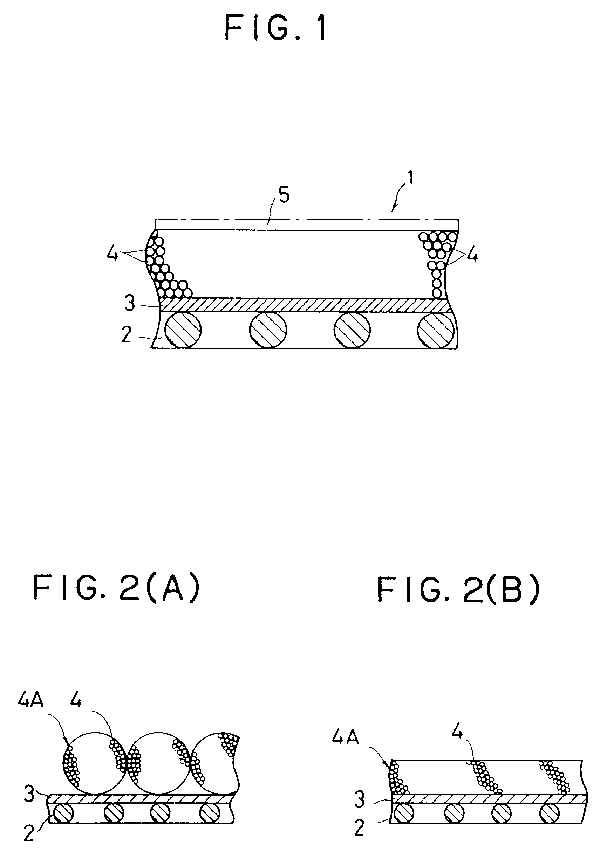

Fig. 1 is a sectional view showing an embodiment of the reinforcing fiber sheet according to the invention. The reinforcing fiber sheet 1 according to the invention comprises a support 2 and a reinforcing fiber layer 4 formed by arranging reinforcing fibers in one direction on the support 2 and bonded via an adhesive layer 3 thereto.

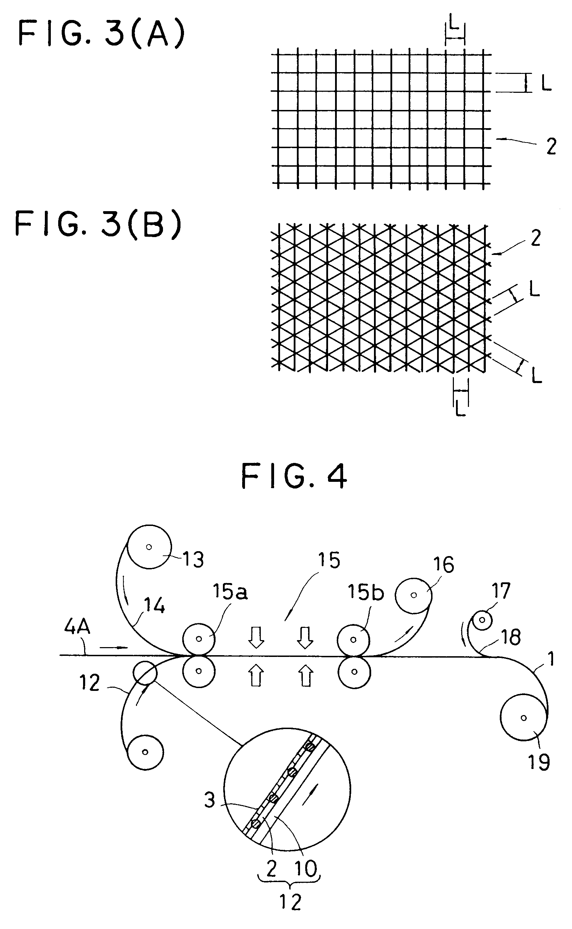

The support 2 according to the invention is, as shown in Figs. 3(A) and 3(B), a two-axis mesh member (Fig. 3(A)) or a three-axis mesh member (Fig. 3(B)), with an inter-tow interval L of 1 to 50 mm. If the interval L is less than 1 mm, it is difficult to impregnate the reinforcing fibers efficiently with the matrix resin from the side of the support 2. Therefore, the operation control property is deteriorated. If the interval L is greater than 50 mm, on the other hand, it is difficult to hold the reinforcing fibers on the support 2, thus posing problems in handling.

As the fibers used for the tows to produce the mesh member 2 may be such inorganic fibers as carbon fibers, glass fibers, etc., such metal fibers as stainless steel fibers, etc., such organic fibers as polyester fibers, aramid fibers, nylon fibers, polyethylene fibers, acrylic fibers, etc. and such natural fibers as cotton fibers, silk fibers, etc. The tow suitably has a Tex (TEXTURE) of 1 to 100 g/km. The mesh member 2 may be formed by braiding or knitting such tows. Instead, it may be formed by joining intersections of the tows with an adhesive.

According to the invention, it is possible to use any adhesive for forming the adhesive layer 3 so long as it generally permits tentative bonding of the reinforcing fiber layer 4 to the support 2. Suitably, the adhesive has satisfactory affinity to the matrix resin, with which the reinforcing fiber layer 4 is impregnated. For example, when using an epoxy resin as the matrix resin, an epoxy type adhesive is suitably used. Since the adhesive layer 3 only has to have the reinforcing fiber layer 4 bonded temporarily to the support 2, its thickness may be 1 to 50$\mu$ m, preferably 3 to 20 $\mu$ m.

The reinforcing fiber layer 4 may be formed by using various fibers, e.g., pitch type carbon fibers, boron fibers, PAN type carbon fibers, aramid fibers, glass fibers, steel fibers, polyester fibers, polyethylene fibers, etc. These various kinds of fibers may be used independently or as hybrid fibers obtained by combining two or more different kinds of fibers.

The reinforcing fiber layer 4 is formed by arranging on the adhesive layer, fiber bundles each of a plurality of fiber filaments converged with a sizing agent and with a slight twist provided, and then squeezing the fiber bundles from above so that they are lightly unfastened. Thus, the fibers are arranged in one direction in a plurality of fiber layers stacked one above another and coupled together by the sizing agent or the twist, and bonded by the adhesive layer 3 to the support 2. Thus, the reinforcing fiber sheet 1 as shown in Fig. 1 is obtained as desired.

In this sheet 1, a plurality of layers of reinforcing fibers 4 are formed by closely arranging fiber bundles 4A in one direction over the support 2 via the adhesive layer 3, as shown in Fig. 2(A) and urging and squeezing the fiber bundles 4A from above to bond the lowermost portion of the fiber bundles 4A to the adhesive layer 3. Thus, the reinforcing fibers 4 are arranged closely on the support 2, as shown in Fig. 2(B). If desired, it is possible to arrange the fiber bundles 4A coarsely at an interval on the support 2.

It is possible to open the fiber bundles 4A before arranging them on the support 2. The extent of squeezing of the fiber bundles 4A depends on the desired thickness of the fiber layer 4 thus obtained. As an example, with carbon fiber bundles each obtained by converging about 12,000 carbon fiber filaments each having a diameter of 5 to 15$\mu$ m, they are squeezed such that their lateral width becomes about 5 mm.

Subsequently, if desired, a viscous resin layer 5 (Fig. 1) may be formed on the reinforcing layer 4 by uniformly spray coating a liquid resin in a range of 0.1 to 25 % by weight with respect to the reinforcing fibers used to prevent the reinforcing fiber layer 4 from getting nappy or fluffy. The viscous resin layer 5 will be described in detail below.

The above reinforcing fiber sheet 1 according to the invention can be manufactured in a manner as shown in Fig.4.

The support 2, which is a mesh member, is placed on releasing paper 10 and then is coated with the adhesive from above, thus forming a support sheet 12. In this embodiment, the adhesive 3 is a bis A type epoxy resin prepared such as to have a viscosity of about 10,000 mPa.s at 70 °C . It is coated at a rate of 15 g/m$^2$ on the releasing paper 10 having the support 2.

The support sheet 12 which has been prepared in this way, is fed between pressure application rollers 15a and 15b constituting a pressure application section 15 such that it faces a releasing paper 14 which is supplied from a releasing paper roll 13. At the same time, fiber bundles 4A of reinforcing fibers 4 are fed between the support sheet 12 and releasing paper 14 in the pressure application section 15. The fiber bundles 4A are thus pressed by the pressure application rollers 15a and 15b and a support member (not shown) so that they are lightly unfastened. The resultant reinforcing fibers 4 are thus bonded via the adhesive layer 3 to the support 2 of the support sheet 12.

In this way, the reinforcing fiber sheet 1 is obtained. Then, the releasing paper 14 is taken up on a releasing paper take-up roll 16. Also, if necessary, a viscous resin layer 5 is formed by uniformly coating a liquid resin on the reinforcing fiber layer 4 in a range of 0.1 to 25 % by weight with respect to the reinforcing fibers and/or a cover film 18 supplied from a film supply roll 17 is applied to the reinforcing fibers 4. In this state, the sheet is taken up on a sheet take-up roll 14.

Methods of reinforcing a building structure using the reinforcing fiber sheet 1 obtained in the above way according to the invention will be described with reference to Fig. 5.

In one reinforcing method, at the site of reinforcement of a building structure, for instance legs of a bridge or an elevated road, the cover film 18 is separated, if necessary. Then, the reinforcing fiber layer 4 of the reinforcing fiber sheet 1 are coated and impregnated with a matrix resin using suitable coating means such as a roller, a brush or spraying. Then, the sheet 1 is applied to the portion 15 to be reinforced with the side of the reinforcing fiber layer 4 on the side of the reinforcement portion 15 of the building structure. Thereafter, the relesing paper 1 is separated. In this way, a desired number of sheets 1 are stacked. Preferably, whenever the sheet 1 is stacked, it is impregnated with the matrix resin from the side of the support 2 using a hand roller or the like. Finally, a tape is wound on the surface to form a cover. The matrix resin is then hardened by leaving or heating it.

In this way, when using the reinforcing fiber sheet 1 according to the invention for the reinforcement, the reinforcing fiber layer 4 is impregnated with the matrix resin at the site of the reinforcement. In order to obtain the hardening of the matrix resin by leaving the sheet 1 after application to the reinforcement portion, the matrix resin is suitably of a room temperature setting type.

As the room temperature setting type resin may be used epoxy resin, unsaturated polyester resin., etc., in which the proportions of curing (or hardening) agent and curing (or hardening) acclerator are adjusted such as to be able to obtain hardening at room temperature.

In a different reinforcing method, a room temperature setting type matrix resin 30 is coated to a thickness of about 100 μm on the portion 15 to be reinforced. Then, the reinforcing fiber sheet 1 is applied with the side of the reinforcing fibers 4 on the side of the reinforcement portion 15. Then, the releasing paper 10 is separated. Subsequently, in the same way, a desired number of sheets 1 are stacked. Finally, the reinforcing fibers 4 are impregnated with the matrixresin 30 from the side of the support 2. At this time,whenever a sheet 1 is stacked, the reinforcing fibers 4 thereof may be impregnated with the matrix resin from the side of the support 2. Thereafter, in the same way set forth above, a tape is wound on the stack of the sheets 1 to form a cover. The sheets 1 are then left to cause hardening of the matrix resin.

The inventors have made various reinforcing fiber sheets by using various materials in the above methods, and their impregnation property was tested. The results are shown in Table 1. The reinforcing fiber sheets in Examples 1 to 11 of the invention had satisfactory impregnation property. And, when the 3-axis mesh member is used as the support 2, it has been found that the fiber sheet 1 provides excellent fit with a three dimensional curved surface and superior reinforcement effects.

The resin impregnation property was evaluated as follows.

(1) An epoxy resin (provided by Tonen Corporation, under a trade name "FR-E3P") was coated on a transparent film with a roller brush by 250 g/m$^2$.

(2) The reinforcing fiber sheet was cut to a size of 50 cm x 50 cm and then overlapped over the transparent film in (1) such that the reinforcing fiber layer faced the transparent film.

(3) In addition, the epoxy resin in (1) is coated from the reinforcing fiber sheet, i.e., the support with a roller brush by 250 g/m$^2$.

(4) The resin was hardened in this state.

(5) After the resin had been hardened, the size and number of bubbles remaining between the transparent film and reinforcing fiber sheet were checked. When the bubbles were an ellipse of a x b, their diameter was made to be (a x b)$^{1/2}$.

| Evaluation | Number of bubbles of 5 mm and above |
|---|---|
| ● | 0 |
| ○ | 1 to 4 |
| △ | 5 to 19 |
| × | 20 and above |

## Table 1

|  | Reinforcing fiber |  | FAW g/m2 | Kind of fiber | Coarse mesh characteristics |  |  | Impreg-nation | Nap-piness |
|---|---|---|---|---|---|---|---|---|---|
|  |  |  |  |  | Weight of thread (g/mm) | Inter-thread interval (mm) | Remarks |  |  |
| Example 1 | Tonen | FORCA FT-500 | 175 | Glass | 34 | 5 | 3-axis coarse mesh glass mesh | ◎ | ○ |
| Example 2 | Tonen | FORCA FT-500 | 300 | Glass | 34 | 10 | 3-axis coarse mesh glass mesh | ◎ | ○ |
| Example 3 | Toray | T300B-12000-50B | 200 | Glass | 34 | 5 | 3-axis coarse mesh glass mesh | ◎ | × |
| Example 4 | Toray | T300B-12000-50B | 200 | Glass | 34 | 10 | 3-axis coarse mesh glass mesh | ◎ | × |
| Example 5 | Toray | T700SC-12000-50C | 175 | Glass | 34 | 10 | 3-axis coarse mesh glass mesh | ◎ | ◎ |
| Example 6 | Toray | T700SC-12000-50C | 300 | Glass | 34 | 10 | 3-axis coarse mesh glass mesh | ◎ | ◎ |
| Example 7 | Toray | T700SC-12000-50C | 175 | Glass | 34 | 20 | 2-axis coarse mesh glass mesh | ◎ | ◎ |
| Example 8 | Toray | T700SC-12000-50C | 175 | Glass | 34 | 10 | 2-axis coarse mesh glass mesh | ○ | ◎ |
| Example 9 | Toray | T700SC-12000-50C | 175 | Glass | 34 | 5 | 2-axis coarse mesh glass mesh | ◎ | ◎ |
| Example 10 | Toray | T700SC-12000-50C | 175 | Glass | 68 | 10 | 2-axis coarse mesh glass mesh | ◎ | ◎ |
| Example 11 | Toray | T700SC-12000-50C | 175 | Polyester | 43 | 10 | 2-axis coarse mesh polyester coarse mesh | ◎ | ◎ |
| Com.Ex. 1 | Tonen | FORCA FT-500 | 175 | Glass | 6 | 0.4 | JIS R3414 EP-03B correspondent | △ | ○ |
| Com.Ex. 2 | Toray | T300B-12000-50B | 200 | Glass | 6 | 0.4 | JIS R3414 EP-03B correspondent | △ | × |
| Com.Ex. 3 | Toray | T700SC-12000-50C | 175 | Glass | 6 | 0.4 | JIS R3414 EP-03B correspondent | × | ◎ |
| Com.Ex. 4 | Toray | T700SC-12000-50C | 175 | Glass | 6 | 0.5 | JIS R3414 EP-02B correspondent | × | ◎ |
| COm.Ex. 5 | Toray | T700SC-12000-50C | 175 | Glass | 34 | 60 | 2-axis coarse mesh glass mesh | Incapable of handling due to broken threads | |

EP 0 598 591 A2

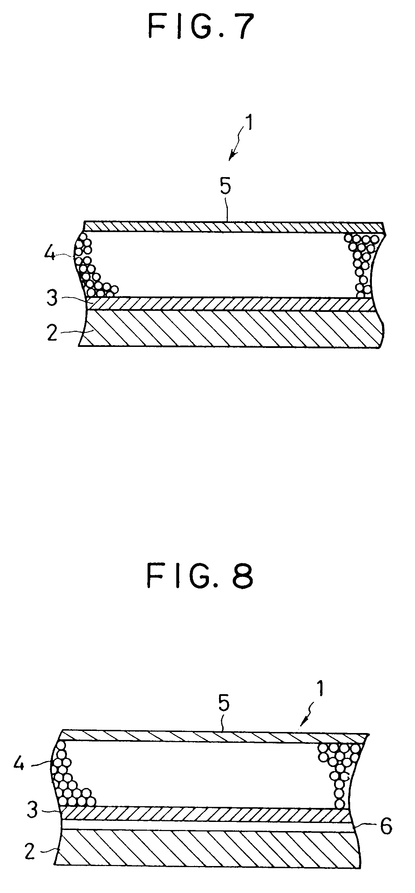

Now, referring to Fig. 7 a still further embodiment of the reinforcing fiber sheet according to the invention will be described.

The reinforcing fiber sheet 1 according to the invention comprises a support 2 and a reinforcing fiber layer 4 formed by arranging reinforcing fibers in one direction and bonded via an adhesive layer 3 to the support 2.

According to the invention, the support 2 may be in the form of a tough and flexible sheet so that it can withstand such operation as applying the reinforcing fiber sheet 1, with the reinforcing fiber layer 4 impregnated with a matrix resin, to a portion for reinforcement manually with the hands of the operator, or hand lay-up producing small size boats. The support 2 may be also suitably releasable and non-permeable to resin in order that it can be separated conveniently from the reinforcing fiber sheet 1 after the application of the reinforcing fiber sheet 1 on the surface of the portion for reinforcement. For such releasable and resin non-permeable sheet may be used a releasing paper or a film of such resin as polyamide, polyester, polyethylene, polypropylene, etc. The thickness of the support 2 is 1 to 500 $\mu$ m, preferably 5 to 200 $\mu$ m, in order that the support 2 is flexible and has a sufficient mechanical strength for supporting the reinforcing fiber layer 4.

According to the invention, it is possible to use any adhesive for forming the adhesive layer 3 so long as it generally permits tentative bonding of the reinforcing fiber layer 4 to the support 2. Suitably, the adhesive has satisfactory affinity to the matrix resin, with which the reinforcing fiber layer 4 is impregnated. For example, when using an epoxy resin as the matrix resin, an epoxy type adhesive is suitaly used. Since the adhesive layer 3 only has to have the reinforcing fiber layer 4 to be bonded temporarily to the support 2, its thickness may be 1 to 50 $\mu$ m, preferably 3 to 20 $\mu$ m.

The reinforcing fiber layer 4 may be formed by using various fibers, e.g., pitch type carbon fibers, boron fibers, PAN type carbon fibres, aramid fibers, glass fibers, steel fibers, polyester fibres, polyethylene fibers, etc. These various kinds of fibers may be used independently or as hybrid fibers obtained by combining two or more different kinds of fibers.

The reinforcing fiber layer 4 is formed by forming fiber bundles each of a plurality of fiber filaments converged with a sizing agent and with a slight twist provided and arranging these fiber bundles in one direction. Actually, the fiber bundles are arranged on the adhesive layer 3 and squeezed from above so that they are lightly unbundled. Thus, the fiber bundles are arranged in a plurality of fiber bundle layers stacked one above another and coupled together by the sizing agent or the twist. At this time the lowermost fiber bundle layer of the reinforcing fiber layer 4 is lightly bonded by the adhesive layer 3 to the support 2.

According to the invention, a viscous resin layer 5 is formed on the reinforcing fiber layer 4 on the support 2. The viscous resin layer 5 is formed by uniformly spray coating a liquid resin in a range of 0.1 to 25 % by weight, preferably 1 to 10 % by weight, with respect to the reinforcing fibers constituting the reinforcing fiber layer 4. If the amount of the liquid resin that is coated is less than 0.1 % by weight, the nappiness or fluffiness can not be effectively prevented. If the amount is greater than 25 % by weight on the other hand, the impregnation of the reinforcing fiber layer 4 with the matrix resin is deteriorated.

The liquid resin has a viscosity of 100 to 100,000 mPa.s preferably 500 to 10,000 mPa.s at 20°C. Its examples are epoxy resin without containing any curing agent, unsaturated polyester resin, vinyl ester resin, vinyl acetate resin, phenol resin, polyvinyl alcohol resin, starch, etc.

With the reinforcing fiber sheet 1 according to the invention, reinforcement of building structures may be made in the prior art method.

According to the invention, the viscous resin layer 5 is provided on the reinforcing fiber layer 4. Thus, it is possible to prevent the reinforcing fibers in the reinforcing fiber layer 4 from becoming nappy or fluffy. In addition, the impregnation with the matrix resin can be improved. Thus, the reinforcing fiber sheet 1 can be readily handled in the reinforcement operation, and it is possible to obtain improved operation control property.

Although in the above mentioned embodiment as shown in Fig. 7 the support 2 is described as using for example, a releasable and resin non-permeable sheet like a releasing paper or a film of such resin as polyamide, polyester, polyethylene, polypropyrene, etc., the mesh member with an inter-tow interval of 1 to 50 mm as stated above, may be used as the suppot (see Fig. 1). In this case, it is possible to coat the matrix resin from the side of the support 2 and to thereby effect the impregnation of the reinforcing fibers with the matrix resin, after application of the reinforcing fiber sheet 1 to the reinforcement portion.

Fig. 8 shows a still further embodiment of the invention. In this embodiment, an adhesive support 6 is provided between support 2 and reinforcing fiber layer 4 such that it is integral with adhesive layer 3.

The adhesive support 6 is permeable to resin so that the adhesive layer 3 is firmly secured to the support 6 with migration of the resin of the adhesive layer 3 into the support 6. Examples of such resin-permeable support 6 are a glass cloth, a scrim cloth, a glass paper, a glass non-woven cloth, and non-woven cloths of various polymers such as polyamide, PPS (polyphenylene sulfide), etc. For the purpose of the formation of the adhesive layer 3, the thickness of the support 6 may be 1 to 100 $\mu$ m, preferably 5 to 50 $\mu$ m.

The inventors have made various examples of the reinforcing fiber sheet 1 as shown in Fig. 7, and their nappiness or fluffiness property and impregnation property were tested. The results are shown in Table 2. In Examples 12 to 21 of the reinforcing fiber sheet according to the invention, the nappiness could be suppressed, and the matrix resin impregnation was satisfactory.

Similarly, the inventors produced various examples of the reinforcing fiber sheet 1 using the mesh member which was descirbed with reference to Fig. 1, as the support 2. In addition, the viscous resin layer 5 was formed on the sheet. These examples were tested in nappiness or fluffiness property and impregnation property. The results are shown in Table 3. It has been found that in the reinforcing fiber sheets according to Examples 22 to 26, as compared with the examples in Table 1 in which the viscous resin layer 5 was not formed, the nappiness could be suppressed, and the matrix resin impregnation was satisfactory.

EP 0 598 591 A2

**Table 2**

| | Reinforcing fiber | Weight (FAW) g/m2 | Spray quantity (RAW) g/m2 | Sprayed resin ratio (FAW/RAW) wt. % | Sprayed resin viscosity cps (20 ℃) | Nappiness | Impregnation | Support |
|---|---|---|---|---|---|---|---|---|
| Example 12 | Tonen FORCA FT-500 | 175 | 9.5 | 5.4 | 3,200 | O | O | |
| Example 13 | Tonen FORCA FT-500 | 300 | 17.3 | 5.8 | 3,200 | O | O | |
| Example 14 | Toray T300B-12000-50B | 200 | 10.3 | 5.2 | 3,200 | O | O | |
| Example 15 | Toray T300B-12000-50B | 300 | 12.5 | 4.2 | 3,200 | O | O | |
| Example 16 | Toray T300B-12000-50B | 200 | 2.3 | 1.2 | 3,200 | O | O | |
| Example 17 | Toray T300B-12000-50B | 200 | 32.3 | 16.2 | 3,200 | O | O | |
| Example 18 | Toray T300B-12000-50B | 200 | 9.8 | 4.9 | 560 | O | O | |
| Example 19 | Toray T300B-12000-50B | 200 | 10.8 | 5.4 | 21,000 | O | O | |
| Example 20 | Toray T700SC-12000-50C | 175 | 7.5 | 3.8 | 3,200 | O | O | |
| Example 21 | Toray T700SC-12000-50C | 300 | 12.8 | 4.3 | 3,200 | O | O | |
| | | | | | | | | |
| Com. Ex. 6 | Tonen FORCA FT-500 | 175 | --- | --- | --- | × | O | JIS R3414 EP-03B correspondent |
| Com. Ex. 7 | Toray T300B-12000-50B | 200 | --- | --- | --- | × | O | |
| Com. Ex. 8 | Toray T700SC-12000-50C | 175 | --- | --- | --- | O | × | |
| Com. Ex. 9 | Toray T300B-12000-50B | 200 | 0.15 | 0.08 | 3,200 | △ | O | |
| Com. Ex. 10 | Toray T300B-12000-50B | 200 | 53.2 | 26.6 | 3,200 | O | △ | |
| Com. Ex. 11 | Toray T300B-12000-50B | 200 | 13.5 | 6.8 | 200,000 | O | × | |
| Com. Ex. 12 | Toray T300-12000-50B | 200 | 15.8 | 7.9 | 50 | Incapable of handling due to breakage of bundles | | |
| Com. Ex. 13 | Toray T700SC-12000-50C | 175 | 0.13 | 0.07 | 3,200 | O | △ | |

9

## Table 3

| | Reinforcing fiber | Weight (FAW) g/m2 | Spray quantity (RAW) g/m2 | Sprayed resin ratio (FAW/RAW) wt. % | Sprayed resin viscosity cps (20 °C) |
|---|---|---|---|---|---|
| Example 22 | Tonen FORCA FT-500 | 175 | 8.5 | 4.9 | 3,200 |
| Example 23 | Tonen FORCA FT-500 | 300 | 18.5 | 6.2 | 3,200 |
| Example 24 | Toray T300B-12000-50B | 200 | 10.5 | 5.3 | 3,200 |
| Example 25 | Toray T700SC-12000-50C | 200 | 7.6 | 3.8 | 3,200 |
| Example 26 | Toray T700SC-12000-50C | 300 | 15.1 | 5.0 | 3,200 |

| | Support | | | | Nap-piness | Impreg-nation |
|---|---|---|---|---|---|---|
| | Kind of fiber | Weight of thread (g/mm) | Inter-thread interval (mm) | Remarks | | |
| Example 22 | Glass | 34 | 5 | 3-axis coarse mesh glass mesh | O | O |
| Example 23 | Glass | 34 | 10 | 3-axis coarse mesh glass mesh | O | O |
| Example 24 | Glass | 34 | 5 | 3-axis coarse mesh glass mesh | O | O |
| Example 25 | Glass | 34 | 10 | 3-axis coarse mesh glass mesh | O | O |
| Example 26 | Glass | 34 | 10 | 3-axis coarse mesh glass mesh | O | O |

The resin impregnation property was evaluated as follows.

10

(1) An epoxy resin (provided by Tonen Corporation, under a trade name "FR-E3P") was coated on a transparent film with a roller brush by 250 g/m².

(2) The reinforcing fiber sheet was cut to a size of 50 cm x 50 cm and then overlapped over the transparent film in (1) such that the viscous resin layer 5 on the reinforcing fiber layer 4 faced the transparent film.

(3) The support, i.e., the releasing paper, was separated from the reinforcing fiber sheet, and the exposed surface is coated with the epoxy resin in (1) with a roller brush by 250 g/m².

(4) The resin was hardened in this state.

(5) After the resin had been hardened, the size and number of bubbles remaining between the transparent film and reinforcing fiber film were checked. When the bubbles were an ellipse of a x b, their diameter was made to be $(a \times b)^{1/2}$.

| Evaluation | Number of bubbles of 5 mm and above |
|---|---|
| ◉ | 0 |
| ○ | 1 to 4 |
| △ | 5 to 19 |
| × | 20 and above |

The nappiness or fluffiness was evaluated as folllows.

(1) The reinforcing fiber sheet was cut to a size of 50 cm x 50 cm, then placed on a flat plate, and then the four corners thereof were secured thereto.

(2) Then, wind of 5 m/sec was applied for 10 minutes to the reinforcing fiber sheet from above one end thereof at an inclination angle of 45 ° and such as to be perpendicular to the fibers of the reinforcing fiber sheet. It was arranged such that the wind was applied to the entire reinforcing fiber sheet surface.

| Evaluation | |
|---|---|
| ◉ | No substantial nappiness |
| ○ | Nappy area being 5 % or less |
| △ | Nappy area being 20 % or less |
| × | Nappy area being above 20 % |

As has been described in the foregoing, with the reinforcing fiber sheet according to the invention the support for supporting the reinforcing fibers is a mesh member with an inter-tow interval of 1 to 50 mm. Thus, excellent impregnation with matrix resin can be obtained when reinforcing a building structure such as a bridge or an elevated road with fiber-reinforced plastics, that is, satisfactory operation control can be obtained at the side of reinforcement. In addition, the reinforcement strength can be improved. Further, the reinforcing fiber sheet according to the invention can be used suitably when hand lay-up producing small size boats or the like with fiber-reinforced plastics.

Moreover, the reinforcing fiber sheet according to another embodiment of the invention has the viscous resin layer which is formed by uniformly coating the reinforcing fiber layer with a liquid resin in a range of 0.1 to 25 % by weight with respect to the reinforcing fibers. It is thus possible to prevent nappiness at the time of the handling and permit readier handling. In addition, excellent impregnation with matrix resin can also be obtained when reinforcing building structures such as bridges or elevated roads with fiber-reinforced plastics or when hand laying-up small boats with fiber-reinforced plastics.

## Claims

1.  A reinforcing fiber sheet (1) comprising at least a support (2), and a reinforcing fiber layer (4) formed by arranging reinforcing fibers in one direction and bonding said reinforcing fibers via an adhesive layer (3) to said support (2), characterized in that said support is a mesh member with an inter-tow interval of 1 to 50 mm.

2.  A reinforcing fiber sheet (1) comprising a support (2), a reinforcing fiber layer (4) formed by arranging reinforcing fibers in one direction, said reinforcing fiber layer (4) being bonded via an adhesive layer (3) to said support (2), and a viscous resin layer (5) formed by uniformly coating a liquid resin on said reinforcing fiber layer (4) in a range of 0.1 to 25% by weight with respect to said reinforcing fibers.

3.  The reinforcing fiber sheet according to claim 2, wherein said viscous resin layer is formed by uniformly spray coating a liquid resin in a range of 0.1 to 25% by weight, preferably 1 to 10% by weight, with respect to the reinforcing fibers constituting the reinforcing fiber layer.

4.  The reinforcing fiber sheet according to claim 3, wherein said liquid resin has a viscosity of 100 to 100,000 mPa.s, preferably 500 to 10,000 mPa.s at 20°C.

5.  The reinforcing fiber sheet according to claim 4, wherein said liquid resin is epoxy resin without containing any curing agent, unsaturated polyester resin, vinyl ester resin, vinyl acetate resin, phenol resin, polyvinyl alcohol resin, or starch.

6.  The reinforcing fiber sheet according to any of claims 2 to 5, wherein said support (2) is or includes a releasable and resin non-permeable sheet.

7.  The reinforcing fiber sheet according to claim 6, wherein said releasable and resin non-permeable sheet is a releasing paper or a film of such resin as polyamide, polyester, polyethylene or polypropyrene.

8.  The reinforcing fiber sheet according to any of claims 2 to 5, wherein said support is a mesh member with an inter-tow interval of 1 to 50 mm.

9.  The reinforcing fiber sheet according to claim 1 or claim 8, wherein said fibers used for the tows are such inorganic fibers as carbon fibers or glass fibers, such metal fibers as stainless steel fibers, such organic fibers as polyester fibers, aramid fibers, nylon fibers, polyethylene fibers or acrylic fibers, or such natural fibers as cotton fibers or silk fibers.

10. The reinforcing fiber sheet according to claim 9, wherein each of said tows, has a Tex (TEXTURE) of 1 to 100 g/km.

11. The reinforcing fiber sheet according to any of claims 1, 8, 9 and 10, wherein said mesh member is formed by braiding or knitting said tows, or is formed by joining intersections of said tows with an adhesive without braiding or knitting.

12. The reinforcing fiber sheet according to any one of the preceding claims, wherein said reinforcing fibers are one or more than two kinds of the fibers selected from pitch type carbon fibers, boron fibers, PAN type carbon fibers, aramid fibers, glass fibers, steel fibers, polyester fibers and polyethylene fibers.

# FIG. 1

# FIG. 2(A)

# FIG. 2(B)

## FIG. 3(A)

## FIG. 3(B)

## FIG. 4

# FIG. 5

# FIG. 6

# FIG.7

# FIG.8